# FASCICULE DE BREVET EUROPEEN

(11) **EP 1 010 576 B1**
(45) Date de publication et mention de la délivrance du brevet: **29.09.2004**
(21) Numéro de dépôt: 99204333.1
(22) Date de dépôt: 16.12.1999
(51) Int. Cl.: B60P 3/34

(54) **Brise soleil**
Markise
Sun-shade

(30) Priorité: 18.12.1998 FR 9816057
(43) Date de publication de la demande: 21.06.2000
(73) Titulaire: BRUSTOR, N.V., 8940 Geluwe (BE)
(72) Inventeur: Brutsaert, Louis Marcel, 8930 Menen (BE)
(74) Mandataire: Donné, Eddy

(56) Documents cités:
- EP-A- 0 084 477
- DE-A- 3 146 169
- DE-A- 3 732 121
- DE-A- 3 909 937
- DE-U- 7 136 150
- FR-E- 79 667
- GB-A- 617 691
- NL-A- 7 907 204
- US-A- 3 018 783
- US-A- 3 722 571
- US-A- 3 952 758
- US-A- 5 368 056

## Description

La présente invention concerne un brise-soleil, plus spécifiquement un brise-soleil qui est destiné à venir s'appliquer par-dessus une construction, en d'autres termes une couverture procurant une isolation thermique, selon les caractéristiques du préambule de la revendication indépendante 1.

Bien qu'un brise-soleil selon l'invention puisse venir s'appliquer par-dessus n'importe quelle couverture ou n'importe quelle toiture, il trouvera une application particulière dans le domaine des caravanes, des résidences mobiles, des coupoles, ce que l'on appelle des lanterneaux et analogues.

En effet, l'avantage important lié au brise-soleil selon l'invention réside dans le fait qu'il prend peu de place à l'état de repos, tandis qu'en état de marche, ce brise-soleil peut de préférence être amené au-delà des bords du toit à isoler, si bien que l'on obtient une isolation thermique extraordinairement bonne.

Un autre avantage lié au brise-soleil selon l'invention réside dans le fait qu'il peut être ouvert, en d'autres termes qu'il peut être amené en état de marche sans être gêné par des éléments faisant saillie, tels que des contrevents ou analogues.

On obtient les avantages précités liés au brise-soleil selon l'invention, ainsi que d'autres par le fait que ce brise-soleil est constitué principalement par au moins un cylindre d'enroulement sur lequel est fixée une première extrémité d'une toile dont la seconde extrémité est reliée à une latte, cette latte étant reliée aux extrémités de

Un tel brise-soleil est déjà connu du brevet US 3.952.758 et comprend un cylindre d'enroulement pourvu d'une toile et d'un mécanisme de positionnement de la toile avec des bras téléscopiques.

Ce brise-soleil est très encombrant et ne permet pas d'enrouler la toile complètement sur le cylindre, ce qui est désavantageux pour faire des déplacements quand le brise-soleil est monté sur une voiture ou autre moyen de transport.

Le document représentant l'état de la technique le plus pertinent GB 617.691 décrit un brise-soleil pour être monté sur une caravane, qui contient un cylindre d'enroulement monté sur le toit et sur lequel sont enroulées deux toiles qui peuvent être étalées au dessus du toit au moyen d'un mécanisme de commande avec des bras rotatifs étant montés à l'avant et à l'arrière de la caravane.

Un désavantage de ce genre de brise-soleil est que les bras qui sont montés à l'avant et à l'arrière sont génant pour la vue et pour la circulation et que ces bras sont montés à un endroit ou ils sont vulnérables, en cas d'accident par exemple.

Le brevet US 3.722.571 comprend un brise-soleil pour montage sur un bâtiment, au dessus d'une fenêtre par exemple. deux bras qui sont fixés en articulation sous l'action d'un ressort par rapport au toit d'une caravane, à une coupole, ce que l'on appelle un laterneau, ou analogues.

Dans le but de mieux indiquer les caractéristiques de l'invention, on décrit ci-après, à titre d'exemple, sans aucun caractère limitatif, une forme de réalisation préférée d'un brise-soleil selon l'invention en se référant aux dessins annexés dans lesquels:
la figure 1 est une vue en perspective d'un brise-soleil selon l'invention à l'état fermé et appliqué sur une caravane;
la figure 2 représente une vue prise le long de la flèche F2 en figure 1;
la figure 3 est une vue analogue à celle de la figure 1, mais dans laquelle le brise-soleil est à l'état ouvert;
la figure 4 est une vue prise le long de la flèche F4 en figure 3;
la figure 5 est une vue en perspective d'un brise-soleil selon l'invention à l'état ouvert, appliqué sur une surface de toit courbe;
la figure 6 représente une vue prise le long de la flèche F6 en figure 5.
la figure 7 représente à échelle agrandie, une réalisation préférentielle de la partie indiquée par F7 en figure 6;
la figure 8 représente une vue semblable à celle de la figure 7, mais dans la position fermée du brise-soleil selon l'invention.

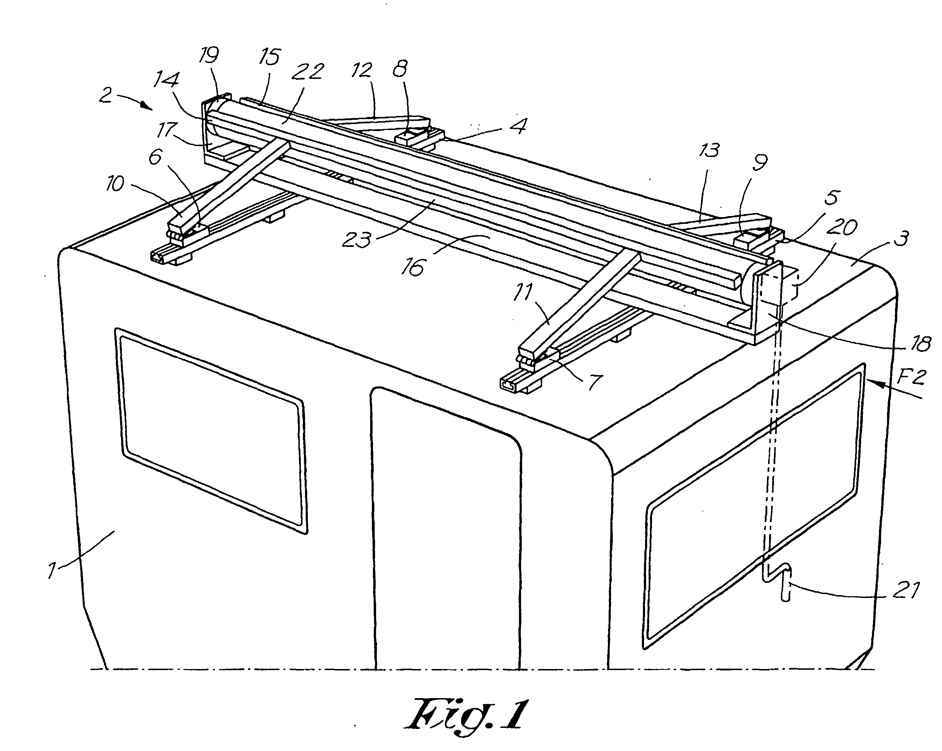

Dans les figures 1 à 4, on représente une caravane ou analogues 1 sur laquelle est appliqué un brise-soleil 2 selon l'invention.

A cet effet, dans cette forme de réalisation, au moins deux barres, dans le cas présent deux barres, respectivement 4 et 5, sont fixées, à une distance appropriée l'une de l'autre, sur le toit 3 de la caravane ou analogues 1, de préférence en direction transversale, barres sur lesquelles sont fixés des supports respectivement 6-7 et 8-9 de préférence en mobilité dans la direction longitudinale des barres 4 et 5, les bras articulés respectivement 10 à 13 du brise-soleil 2 étant fixés en articulation à ces supports 6 à 9 et des ressorts étant prévus entre les supports 6 à 9 et les bras correspondant 10 à 13, qui poussent toujours les bras vers l'extérieur.

Les extrémités libres des bras articulés 10 et 11 d'une part et 12 et 13 d'autre part, sont reliées l'une à l'autre par une latte respectivement 14 et 15.

L'articulation des bras précités 10 à 13 avec les supports respectifs 6 à 9 est réalisée par une charnière proprement dite autour de laquelle est enroulé, à titre de ressort, par exemple un ressort à torsion qui est prévu de telle sorte qu'il a pour effet de toujours mettre les bras correspondants 10 à 13 en mouvement en direction de leur état ouvert.

En position centrale par rapport aux bras 10-11, d'une part, et 12-13, d'autre part, est fixée sur barres 4 et 5, une latte de support 16 qui présente des éléments dressés 17-18 à son extrémité libre, dans lesquels les bouts d'arbre d'un cylindre d'enroulement 19 sont montés en rotation libre.

Un des bouts d'arbre de ce cylindre d'enroulement 19 est relié à un boîtier d'enroulement 20 qui, dans le cas présent, peut être actionné à l'aide d'une manivelle 21 afin de faire tourner le cylindre d'enroulement 19 dans l'un ou dans l'autre sens de rotation.

Bien entendu, le boîtier d'enroulement 20 pourrait être remplacé par un entraînement électrique qui peut être actionné depuis la caravane ou analogues 1.

Enfin, l'extrémité libre de deux toiles respectivement 22 et 23 est fixée sur le cylindre d'enroulement 19, la deuxième de ces extrémités étant reliée aux lattes précitées respectivement 14 et 15.

L'utilisation du brise-soleil 2 selon les figures 1 à 4 est très simple et est indiquée ci-après.

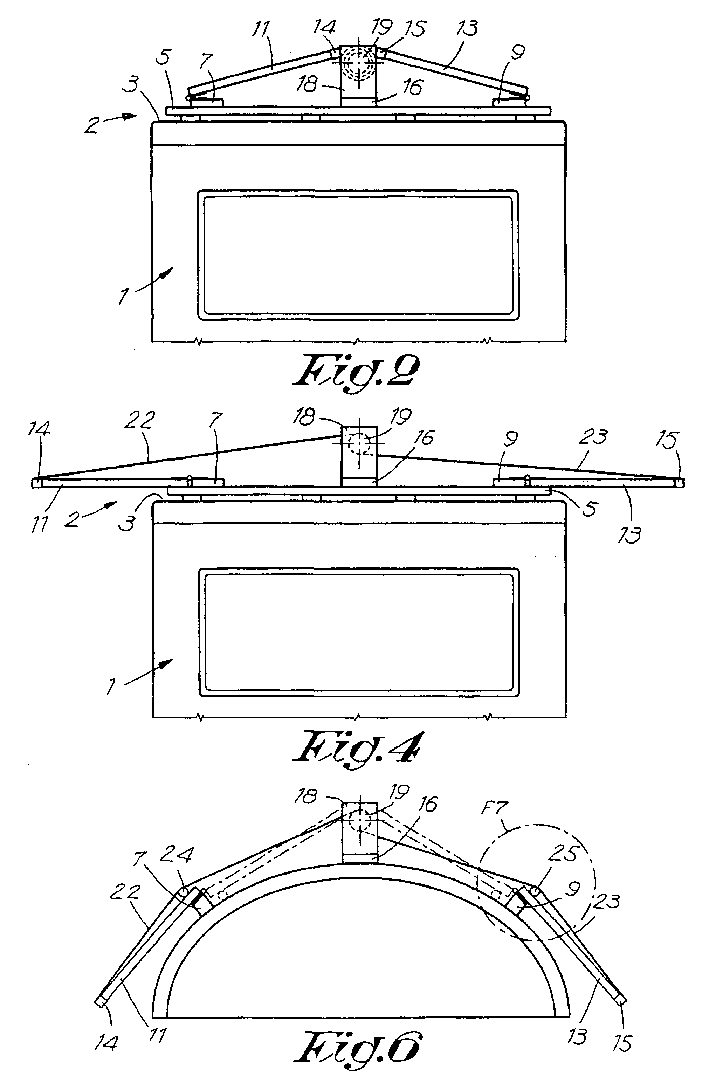

Comme représenté dans les figures 1 et 2, une caravane ou analogues 1, dont le toit est équipé d'un brise-soleil selon l'invention, peut se déplacer tout simplement sur la voie publique sans que le conducteur ne soit gêné en aucune manière par ce brise-soleil 2.

Comme indiqué dans ces figures, les toiles 22 et 23 sont complètement enroulées sur le cylindre d'enroulement 19 et les bras 10 à 13 sont rabattus vers l'intérieur à l'encontre de l'action exercée par leur ressort de torsion précité, position dans laquelle les lattes 14 et 15 se trouvent pratiquement contre le cylindre d'enroulement 19.

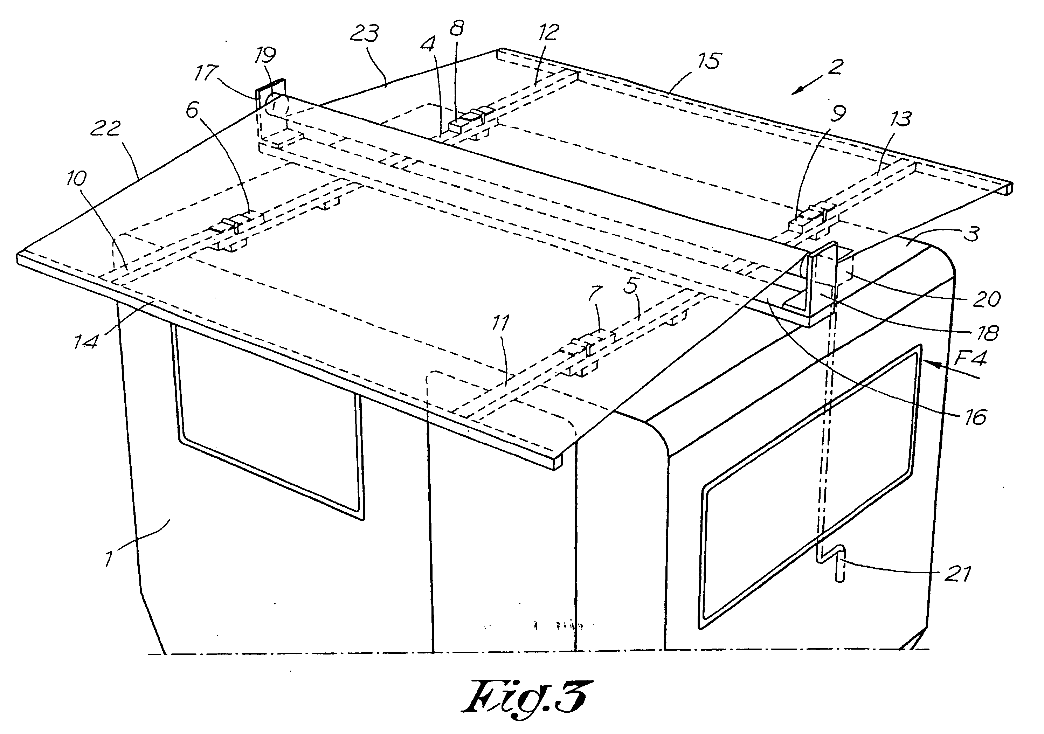

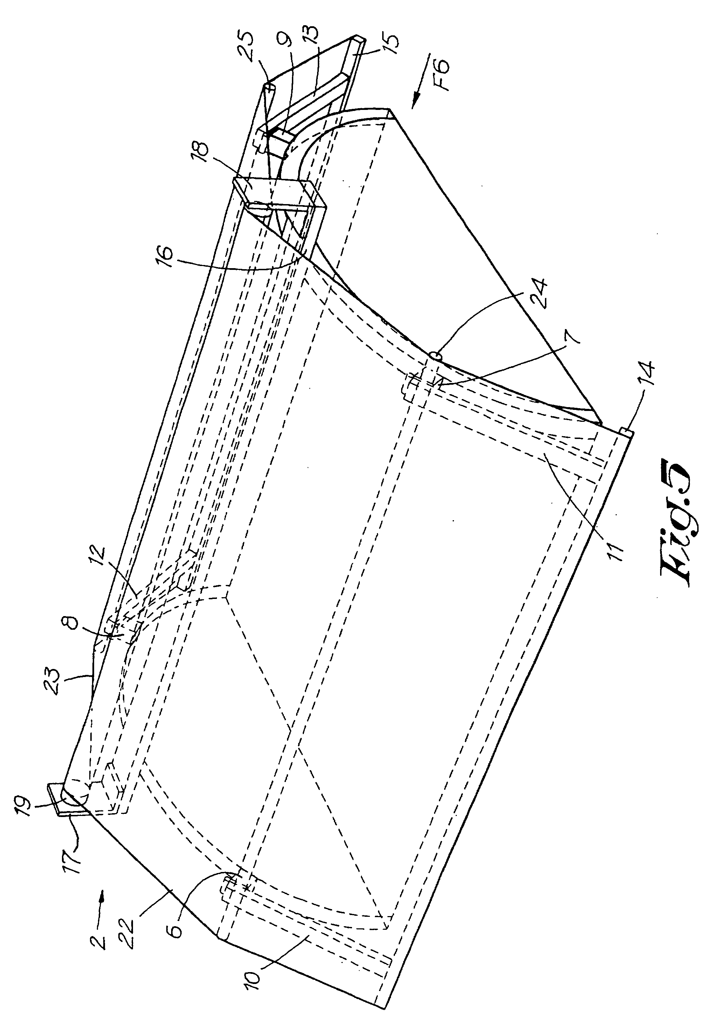

Pour amener le brise-soleil 2 selon l'invention à l'état ouvert, il suffit de faire tourner le cylindre d'enroulement 19, que ce soit à la main ou au moyen d'une manivelle 21, ou que ce soit au moyen d'un entraînement électrique, de telle sorte que les toiles 22 et 23 se libèrent, la tension s'exerçant sur ces toiles 22, 23 étant maintenue par les ressorts à torsion qui sont prévus sur les arbres articulés des bras 10 à 13 et qui font culbuter ces bras vers le bas jusqu'à ce qu'ils aboutissent à l'état tel que représenté dans les figures 3 et 4.

A l'inverse, le cylindre d'enroulement 19 sera mis en rotation dans l'autre sens pour reprendre son état tel que représenté dans les figures 1 et 2.

Il est clair que l'on obtient de cette manière un système qui n'est en aucune manière gêné par des éléments faisant saillie au-dessus du toit 3 de la caravane ou analogues 1, tels que des contrevents ou analogues, et que, par le choix des dimensions et de l'emplacement précis des bras 10 à 13, on obtient le fait que les lattes 14-15, lorsqu'elles se trouvent à l'état ouvert, aboutissent au-delà des parois latérales de la caravane ou analogues 1 de telle sorte que non seulement le toit 3 proprement dit de la caravane ou analogues 1 est protégé contre l'éffet des rayons du soleil, mais que l'on obtient en même temps un surplomb qui empêchera ou au moins diminuera l'incidence du soleil sur les parois latérales de la caravane ou analogues 1.

Bien que l'on représente une solution combinée dans les dessins annexés, il est clair qu'à la place d'un seul cylindre d'enroulement 19, on pourrait prévoir deux cylindres d'enroulement 19 disposés l'un à côté de l'autre, qui le cas échéant sont couplés l'un à l'autre pour pouvoir conserver un entraînement unique, la toile 22 étant enroulée sur le premier cylindre d'enroulement, respectivement déroulée de ce dernier, la toile 23 étant enroulée sur le deuxième cylindre d'enroulement et un étant déroulée.

Même si un tel brise-soleil 2 trouvera de préférence une application dans le domaine des véhicules roulants tels que des caravanes et analogues 1, il est clair qu'il peut également trouver une application dans le domaine des constructions fixes; à cet égard, on envisage des serres, des coupoles, ce que l'on appelle des lanterneaux et analogues.

Bien que l'on représente dans les dessins le cylindre d'enroulement 19 sous forme d'une construction ouverte, il est clair qu'un tel cylindre d'enroulement 19 peut être recouvert par un logement ou un recouvrement approprié dans le but de protéger les toiles enroulées 22, 23 contre l'effet des conditions atmosphériques lorsque le brise-soleil 2 se trouve à l'état fermé.

Il est clair que l'on prévoira toujours au moins deux paires de bras respectivement 10-11 et 12-13 d'autre part; toutefois, rien n'empêche de prévoir entre les bras 10-11 et 12-13 un troisième ou un quatrième bras lorsque le brise-soleil possède une longueur relativement grande.

Bien que l'on représente dans les dessins le brise-soleil de manière symétrique par rapport au toit sur lequel il est appliqué, il est clair qu'un tel brise-soleil peut également être appliqué de manière asymétrique, dans le sens où le surplomb d'un côté de la caravane ou analogues 1 est supérieur à celui de l'autre côté.

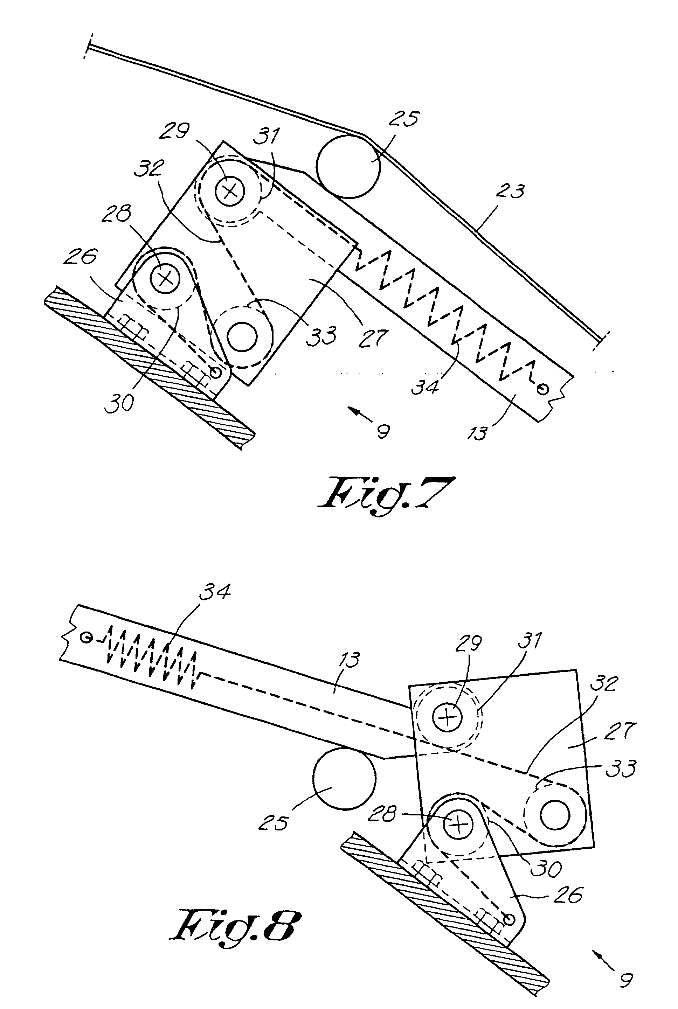

Dans les figures 5 et 6, on représente encore une forme de réalisation par laquelle on applique un brise-soleil selon l'invention sur un toit courbe.

Dans ce cas, la construction correspondra à celle indiquée ci-dessus; toutefois, sur chaque paire de bras 10-11 et 12-13, on appliquera des buses ou des tiges 24, 25 afin d'empêcher le fait que les toiles 22 et 23 ne s'appuient sur les bras respectifs 10-11 et 12-13, en leur permettant pour ainsi dire de fléchir entre ces bras.

Il est clair que des buses ou des tiges 24 et 25 de ce type peuvent également trouver une application sur un toit droit, par exemple lorsqu'on souhaite faire tourner les bras 10, 11 et 12, 13 au-delà de 180 degrés.

Dans une application sur un toit courbe, les supports 6 à 9 peuvent être réalisés comme représenté aux figures 7 et 8.

Dans cet exemple chaque support 6 à 9 est constitué par une partie fixe 26 montée sur le toit courbe et une partie mobile 27 fixée, d'une manière pivotante, sur ladite partie fixe 24, au moyen d'un axe 28, les bras 7, 10 à 13 étant fixés à pivotement sur les libres parties mobiles correspondantes par un axe 29.

Dans ce cas, les axes 28 et 29 sont pourvus d'une roue, respectivement 30-31 formant guide pour un cable 32 lequel passe sur une roue intermédiaire 33.

Le cable 32 est fixé, d'une part, à ladite partie fixe 26 et, d'autre part, à un ressort 34 fixé lui-même au bras correspondant 10 à 13.

Il va de soi qu'une disposition selon les figures 7 et 8 facilitera la fermeture du brise-soleil étant donné que, en fixant sur les bras 10-11 ou 12-13 par la toile 23 cette dernière fait d'abord tourner ladite partie mobile 27 permettant ensuite de faire basculer facilement vers le haut les bras 10-13 concernés.

## Revendications

1. Brise-soleil constitué par au moins un cylindre d'enroulement (19) qui est fixé sur le toit (3) d'une caravane, le faîte d'un lanterneau, d'une couple ou analogues (1), une toile (22-23) dont la première extrémité est fixée sur ce cylindre d'enroulement (19) et la seconde extrémité est reliée à une latte (14-15), **caractérisé en ce que** cette latte (14-15) est reliée aux extrémités de deux bras (10-11) et (12-13) qui sont fixés sur le toit en articulation sous l'action d'un ressort par rapport à la caravane, la coupole, le lanterneau ou analogues (1), de façon à ce qu'au moins une partie du toit (3) de la caravane, du couple, du lanterneau ou analogues (1) peut être protégée contre l'effet des rayons du soleil.

2. Brise-soleil selon la revendication 1, **caractérisé en ce que** les extrémités de deux toiles (22-23) sont fixées sur un seul cylindre d'enroulement (19).

3. Brise-soleil selon la revendication 1, **caractérisé en ce qu'**on prévoit deux cylindres d'enroulement (19) qui portent chacun l'extrémité d'une toile respectivement (22 et 23).

4. Brise-soleil selon la revendication 2 ou 3, **caractérisé en ce que** le(s) cylindre(s) d'enroulement (19) est, respectivement sont, entraînés via un boîtier d'enroulement (20) et une manivelle (21).

5. Brise-soleil selon la revendication 2 ou 3, **caractérisé en ce que** le(s) cylindre(s) d'enroulement (19) est, respectivement sont entraînés à l'aide d'un entraînement électrique.

6. Brise-soleil selon la revendication 1, **caractérisé en ce qu'**entre chaque bras (10-11-12-13) et leur support (6-7-8-9) par rapport à la caravane ou analogues (1), on prévoit un resort qui tente toujours d'ouvrir le bras correspondant par poussée.

7. Brise-soleil selon la revendication 6, **caractérisé en ce que** le ressort précité est un ressort à torsion qui entoure l'arbre articulé de chaque bras (10 à 13) sur son support (6 à 9).

8. Brise-soleil selon l'une quelconque des revendications précédentes, **caractérisé en ce que**, sur le toit (3) d'une caravane ou analogues (1), sont fixées au moins deux barres parallèles (4-5) sur lesquelles sont fixés de manière réglable les supports (6-7-8-9) des bras (10-11-12-13) et sur lesquelles est, respectivement sont également fixés le support d'une latte de support (16) pour le(s) cylindre(s) d'enroulement (19).

9. Brise-soleil selon la revendication 8, **caractérisé en ce que** les supports (6-7-8-9) des bras (10-11-12-13) sont placés sur les lattes (4-5) de telle sorte qu'au moins une latte (14-15) fait saillie par rapport à une paroi latérale de la caravane ou analogues (1) lorsque le brise-soleil (2) se trouve à l'état ouvert.

10. Brise-soleil selon l'une quelconque des revendications précédentes, **caractérisé en ce que** les bras 10-11, respectivement (12-13) sont munis d'une buse ou d'une tige (24, 25) qui, à l'état ouvert du brise-soleil, se trouve au-dessus des bras respectifs (10 à 13).

11. Brise-soleil selon l'une quelconque des revendications précédentes **caractérisé en ce que** les supports (6 à 9) sont constitués par une partie fixe (26) montée sur un toit courbe et une partie mobile (27) reliées l'une à l'autre par un axe.

12. Brise soleil selon la revendication 11, **caractérisé en ce que** sur chaque partie mobile (27) est fixé, à pivotement libre, un bras (10-11-12-13) au moyen d'un axe (29).

13. Brise-soleil selon la revendication 11 ou 12 **caractérisé en ce que** sur les axes (28) et (29) sont montés, rotativement, des roues (30) et (31).

14. Brise-soleil selon l'une des revendications 11, 12 ou 13, **caractérisé en ce qu'**entre les roues (30) et (31) est prévu une troisième roue (33), formant avec les roues (30) et (31) des roues de guidage pour un cable (32) fixé, d'une part, à ladite partie fixe (26) et, d'autre part, au bras correspondant (10-13) par l'intermédiaire d'un ressort (34).

## Patentansprüche

1. Sonnenschutz, bestehend aus mindestens einem Aufrollzylinder (19), der auf dem Dach (3) eines Wohnwagens, am First eines Oberlichts, einer Kuppel oder dergleichen (1) befestigt ist, einem Tuch (22-23), dessen erstes Ende auf dem Aufrollzylinder (19) befestigt ist und dessen zweites Ende mit einer Latte (14-15) verbunden ist, **dadurch gekennzeichnet, dass** diese Latte (14-15) so mit den Enden von zwei Armen (10-11) und (12-13), die auf dem Dach schwenkbar unter der Wirkung einer Feder in Bezug auf den Wohnwagen, die Kuppel, das Oberlicht oder dergleichen (1) befestigt sind, verbunden ist, dass mindestens ein Teil des Dachs (3) des Wohnwagens, der Kuppel, des Oberlichts oder dergleichen (1) gegen die Einwirkung von Sonnenstrahlen geschützt werden kann.

2. Sonnenschutz nach Anspruch 1, **dadurch gekennzeichnet, dass** die Enden der zwei Tücher (22-23) auf einem einzigen Aufrollzylinder (19) befestigt sind.

3. Sonnenschutz nach Anspruch 1, **dadurch gekennzeichnet, dass** zwei Aufrollzylinder (19) vorgesehen sind, die jeweils das Ende eines Tuchs (22 und 23) tragen.

4. Sonnenschutz nach Anspruch 2 oder 3, **dadurch gekennzeichnet, dass** der oder die Aufrollzylinder (19) jeweils mittels eines Aufrollgehäuses (20) und einer Kurbel (21) bewegt wird bzw. werden.

5. Sonnenschutz nach Anspruch 2 oder 3, **dadurch gekennzeichnet, dass** der oder die Aufrollzylinder (19) mit Hilfe eines elektrischen Antriebs bewegt wird bzw. werden.

6. Sonnenschutz nach Anspruch 1, **dadurch gekennzeichnet, dass** zwischen jedem Arm (10-11-12-13) und deren Stütze (6-7-8-9) in Bezug auf den Wohnwagen oder dergleichen (1) eine Feder bereit gestellt ist, die stets versucht, den entsprechenden Arm durch Drücken zu öffnen. festen Teil (26) und andererseits an dem entsprechenden Arm (10-13) mittels einer Feder (34) befestigt ist.

7. Sonnenschutz nach Anspruch 6, **dadurch gekennzeichnet, dass** die vorgenannte Feder eine Torsionsfeder ist, die die Gelenkwelle jedes Arms (10 bis 13) auf seiner Stütze (6 bis 9) umgibt.

8. Sonnenschutz nach einem der vorhergehenden Ansprüche, **dadurch gekennzeichnet, dass** auf dem Dach (3) eines Wohnwagens oder dergleichen (1) mindestens zwei parallele Stangen (4-5) befestigt sind, auf denen regulierbar die Stützen (6-7-8-9) der Arme (10-11-12-13) befestigt sind und auf denen ebenfalls die Stütze einer Stützlatte (16) für den oder die Aufrollzylinder (19) befestigt ist bzw. sind.

9. Sonnenschutz nach Anspruch 8, **dadurch gekennzeichnet, dass** die Stützen (6-7-8-9) der Arme (10-11-12-13) so auf den Latten (4-5) angebracht sind, dass mindestens eine Latte (14-15) in Bezug auf eine Seitenwand des Wohnwagens oder dergleichen (1) vorsteht, wenn der Sonnenschutz (2) geöffnet ist.

10. Sonnenschutz nach einem der vorhergehenden Ansprüche, **dadurch gekennzeichnet, dass** die Arme (10-11) bzw. (12-13) mit einem Rohr oder einem Stab (24,25) versehen sind, das bzw. die sich in geöffnetem Zustand des Sonnenschutzes über den jeweiligen Armen (10 bis 13) befindet.

11. Sonnenschutz nach einem der vorhergehenden Ansprüche, **dadurch gekennzeichnet, dass** die Stützen (6 bis 9) aus einem festen Teil (26), der auf einem gewölbten Dach montiert ist, und einem beweglichen Teil (27) besteht, die durch eine Achse miteinander verbunden sind.

12. Sonnenschutz nach Anspruch 11, **dadurch gekennzeichnet, dass** auf dem beweglichen Teil (27) ein frei schwenkbarer Arm (10-11-12-13) mittels einer Achse (29) befestigt ist,

13. Sonnenschutz nach Anspruch 11 oder 12, **dadurch gekennzeichnet, dass** auf den Achsen (28) und (29) drehbar Räder (30) und (31) montiert sind.

14. Sonnenschutz nach einem der Ansprüche 11, 12 oder 13, **dadurch gekennzeichnet, dass** zwischen den Rädern (30) und (31) ein drittes Rad (33) bereit gestellt ist, das mit den Rädern (30) und (31) Führungsräder für ein Kabel (32) bilden, das einerseits an dem festen Teil (26) und andererseits an dem entsprechenden Arm (10-13) mittels einer Feder (34) befestigt ist.

## Claims

1. Sunshade consisting of at least one rolling cylinder (19) which is fixed onto the roof (3) of a caravan, the ridge of a roof-light, a dome or the like (1), a fabric cover (22-23), the first end of which is fixed to the rolling cylinder (19) and the other end to a rail (14-15); **characterized in that** this rail (14-15) is attached to the ends of two arms (10-11) and (12-13) that are mounted onto the roof by joints that operate with a spring with respect to the caravan, the dome, roof-light or the like (1) in such a manner that at least a part of the roof (3) of the caravan, the dome, the roof-light or the like (1) can be protected from the impact of the rays of the sun.

2. Sunshade according to claim 1, **characterized in that** the ends of the two fabric covers (22-23) are fixed onto a single rolling cylinder (19).

3. Sunshade according to claim 1, **characterized in that** two rolling cylinders (19) are used, each of them carrying one of the ends of the respective fabric covers (22 and 23).

4. Sunshade according to claim 2 or 3, **characterized in that** the rolling cylinder(s) (19) is (are) operated by means of a winding box (20) and a handle (21).

5. Sunshade according to claim 2 or 3, **characterized in that** the rolling cylinder(s) (19) is (are) operated with the help of an electrical drive.

6. Sunshade according to claim 1, **characterized in that** a spring is fitted between each arm (10-11-12-13) and their supports (6-7-8-9), with respect to the caravan or similar vehicle (1) that always attempts to open the corresponding arm by pushing.

7. Sunshade according to claim 6, **characterized in that** the above-mentioned spring is a torsion spring wrapped around the articulated shaft of each arm (10 to 13) on its support (6 to 9).

8. Sunshade according to any one of the preceding claims, **characterized in that** at least two parallel bars (4-5) have been fixed onto the roof (3) of a caravan or similar vehicle (1), onto which adjustable supports (6-7-8-9) for the arms (10-11-12-13) are fixed, onto which a support rail (16) for the rolling cylinder(s) is also fixed.

9. Sunshade according to claim 8, **characterized in that** the supports (6-7-8-9) for the arms (10-11-12-13) have been positioned on bars (4-5) in such a manner that at least one bar (14-15) protrudes with regard to a sidewall of the caravan or similar vehicle (1) when the sunshade (2) is in the open position.

10. Sunshade according to any one of the preceding claims, **characterized in that** the arms 10-11, (or 12-13 respectively) are fitted with a bush or shaft (24, 25) which is located above the respective arms (10 to 13) when the sunshade is in the open position.

11. Sunshade according to any one of the previous claims, **characterized in that** the supports (6 to 9) consist of a fixed part (26) mounted on a curved roof and a moving part (27), linked to one another by means of an axle.

12. Sunshade according to claim 11, **characterized in that** each moving part (27) is fixed, with a free rotation, to an arm (10-11-12-13) by means of an axle (29).

13. Sunshade according to claim 11 or 12, **characterized in that** rotating wheels (30) and (31) have been mounted on the axles (28) and (29).

14. Sunshade according to claims 11, 12 or 13, **characterized in that** a third wheel (33) is foreseen between wheels (30) and (31), which, together with wheels (30) and (31), forms guiding wheels for a fixed cable (32) to the above-mentioned fixed part (26) on the one hand, and to the corresponding arms (10-13) by means of a spring (34) on the other.
